# EUROPÄISCHE PATENTANMELDUNG

(11) **EP 0 759 608 A2**
(43) Veröffentlichungstag der Anmeldung: **26.02.1997**
(21) Anmeldenummer: 96111816.3
(22) Anmeldetag: 23.07.1996
(51) Int. Cl.: G11B 7/00, G11B 7/09

(54) **Wiedergabesystem für einen optischen Aufzeichnungsträger mit mehreren Informationsebenen**

(30) Priorität: 17.08.1995 DE 19530197
(71) Anmelder: NOKIA TECHNOLOGY GmbH, 75175 Pforzheim (DE)
(72) Erfinder: Reime, Gerd, 75328 Schömberg (DE)

(57) **Zusammenfassung**

Zum Vermindern der gegenseitigen Beeinflußung zwischen den Informationsebenen (L1, L2) eines mehrschichtigen plattenförmigen optischen Aufzeichnungsträges ist eine erste teildurchlässig verspiegelte Informationsebene (L1) direkt unter der Trägeroberfläche (S1) angeordnet, die einer Lesevorrichtung mit einem optischen System (Le) zugewandt ist. Eine zweite hochgradig verspiegelte Informationsebene (L2) ist unter der dem optischen System (Le) abgewandten Trägeroberfläche (S2) angeordnet. Die Informationsebenen (L1, L2) können vorteilhaft direkt in die Oberflächen der Substratscheibe gepreßt und jeweils mit einer Schutzschicht vor mechanischer Beschädigung geschützt werden. Das optische System (Le) liest die Information der zwei Informationsebenen (L1, L2) einseitig durch die Substratscheibe hindurch mit einem Laserstrahlenbündel (LB), das alternativ jeweils auf eine Informationsebene fokussierbar ist. Erfindungsgemäß ist das optische System (Le) während des Lesens der Informationsebene (L1) so eingestellt, daß das Laserlicht nach dem Durchdringen der zu lesenden Informationsebene (L1) und Reflexion an der Informationsebene (L2) auf die Rückseite der zu lesenden teildurchlässig verspiegelte Ebene (L1) fokussiert wird.

## Beschreibung

Die Erfindung betrifft ein Wiedergabesystem für einen plattenförmigen optischen Aufzeichnungsträger, der nach dem Prinzip einer COMPACT disc digitale Information auf optisch auswertbaren Oberflächen enthält, die spiralspurförmig oder konzentrisch in mehreren Ringspuren auf übereinanderliegenden Informationsebenen angeordnet sind, welche von einer Seite des Aufzeichnungsträgers lesbar sind. Ein solcher Träger, bei dem die Informationsebenen nach dem sogenannten "Dual-Layer-Prinzip" angeordnet sind, ermöglicht eine sehr hohe Speicherdichte und ist beispielsweise zum Aufzeichnen von Videosignalen geeignet.

Bezüglich des Aufbaus solcher Aufzeichnungsträger wird bewußt eine maximale Übereinstimmung mit der bekannten Audio-CD angestrebt, um einerseits weitestgehend unverändert mit vorhandener Technologie zu fertigen und andererseits ohne größeren mechanischen Zusatzaufwand ein Abspielgerät für verschiedene Trägertypen nutzen zu können. Dieses wird wiedergabeseitig durch eine Lesevorrichtung vereinfacht, die beide Informationsebenen von einer Trägerseite liest. Derartige Lösungen sind zum Beispiel aus den Druckschriften US-A-3 855 426, US-A-5 373 499 und EP-A-0 605 924 und der DE-Zeitschrift "Funkschau", 1995, Heft 14, Seiten 52-53 bekannt.

Eine in der genannten Zeitschift beschriebene erste Art doppelschichtiger Aufzeichnungsträger enthält eine transparente Substratscheibe mit einer Dicke von 1,2 mm, auf der einseitig zwei Informationsebenen mit einer Schichtdicke von 40 µm übereinander liegen. Die Information ist in der dem Substrat abgewandten Seite jeder Informationsebene in einer Reihe aufeinanderfolgender mikrofeiner Vertiefungen, sogenannter Pits, entlang einer Aufzeichnungspur gepreßt und vor dem Auftragen der zweiten Informationsebene teildurchlässig verspiegelt. Die Oberfläche der zweiten Informationsebene ist, wie bei der bekannten Audio-CD, mit einer Metallschicht hochgradig verspiegelt.

Die zweite Art der beschriebenen doppelschichtigen Aufzeichnungsträger enthält zwei 0,6 mm dicke, transparente Substratscheiben, die einseitig je eine Informationsebene tragen, welche in getrennten Preßvorgängen aufgebracht werden. Nach dem Pressen werden beide Substratscheiben mit einer teildurchlässig verspiegelten Trennschicht zusammengefügt. Die genannten Aufzeichnungsträger werden bei der Wiedergabe von der Seite der Substratscheibe gelesen, die keine Informationsebene trägt.

Eine optoelektronische Lesevorrichtung, bei der ein von einem Linsensystem auf verschiedene Höhen fokussierbares Laserstrahlenbündel mit annähernd rundem Querschnitt einen feinen Fokusfleck auf die Oberfläche projiziert, liest die Informationsebenen vom optischen Aufzeichnungsträger. Ein Servosystem führt die Lesevorichtung kontinuierlich exakt über die Spur des rotierenden Aufzeichnungsträgers und ein Lichtsensor empfängt die aufgezeichnete Information als Reflexion des Laserstrahlenbündels in Abhängigkeit von den optischen Eigenschaften der vom Fokusfleck erhellten Oberfläche. Da das Laserlicht des Strahlenbündels auf der Oberfläche der Informationsebene fokussiert ist und die Schärfentiefe der Lesevorrichtung nur wenige Mikrometer beträgt, kann die Information ohne Beeinträchtigung durch die Oberfläche der transparenten Substratscheibe des Aufzeichnungsträgers gelesen werden.

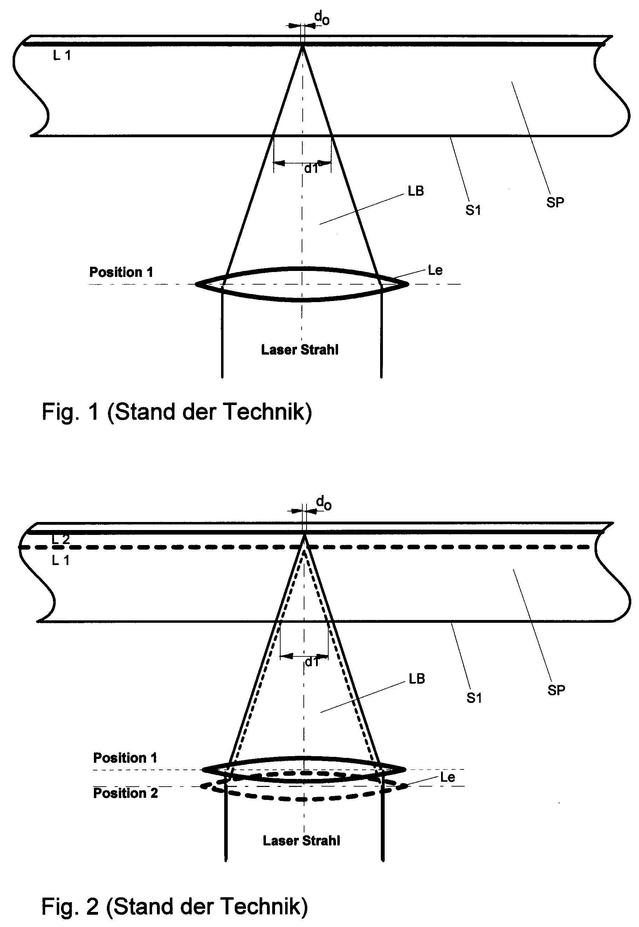

Wie Fig. 1 zeigt, hat bei der bekannten Audio-CD der Fokusfleck auf der Oberfläche der Informationsebene L1 einen Durchmesser dₒ von etwa 1 µm, wohingegen das Laserstrahlenbündel LB beim Eintreten in die transparente Substratscheibe SP noch einen Durchmesser d₁ von etwa 800 µm aufweist. Damit haben Verunreinigungen und Inhomogenitäten auf der oder kurz unter der Trägeroberfläche S1 praktisch keinen Einfluß auf die gelesene Information.

Das Laserstrahlenbündel LB muß zum Lesen eines in Fig.2 gezeigten doppelschichtigen Aufzeichnungsträgers mit einem durch eine Linse Le angedeuteten optischen System in der Lesevorrichtung auf jede Informationsebene L1, L2 gesondert fokussierbar sein. Das optische System ist dafür auf die gezeigten Positionen 1 und 2 einstellbar.

Die Information in der gelesenen Spur wird bekanntlich an Hand des Auftretens von Pitflanken bestimmt. Dabei entspricht eine Pitflanke dem Anfang oder dem Ende eines Pits, und die Lage mehrerer Pitflanken zu einander kennzeichnet ein digitales Kodewort, welches einem Abtastwert vom Aufzeichnungssignal entspricht. Ein Abtastwert wird fehlerfrei dekodiert wenn alle Pitflanken, die ein Kodewort bilden, eindeutig erkannt werden.

Anderenfalls wird die fehlende Information von einem Fehlerkorrektursystem näherungsweise bestimmt und synthetisch ersetzt. Dabei entstandene Abweichungen im Wiedergabesignal vom ursprünglichen Abtastwert sind ab einer bestimmten Häufigkeit insbesondere bei einer hohen Signaldichte, wie beispielsweise bei einer Videowiedergabe, als optische Störung in Form von Bildrauschen erkennbar.

Ein an sich bekanntes Problem besteht beim Lesen eines mehrschichtigen optischen Aufzeichnungsträgers im gegenseitigen Beeinflussen der Informationsebenen.

Aus der Druckschrift US-A-3 855 426 ist bereits bekannt, daß ein Laserstrahlenbündel, das eine bestimmte Informationsebene zum Lesen durch Fokussieren auswählt, auch eine entsprechende Fläche einer darüber- oder darunterliegenden Informationsebene beleuchtet. Da auch die Oberfläche der nicht gelesenen Informationsebene einen Teil dieses Lichtes reflektiert, besteht eine beachtliche Menge der vom Lichtsensor empfangenen Information aus störendem Licht. Ein systembedingter breiter Öffnungswinkel des Laserstrahlenbündels, der durch einen vorgegebenen Wert der numerischen Apertur festlegt ist, bedingt jedoch, daß eine Ebene, die sich in einem bestimmten Mindestabstand zur ausgewählten Informationsebene befindet, so großflächig beleuchtet wird, daß gleichzeitig eine größere Anzahl von Pits und deren Umgebung im Laserlicht liegen. Somit steht einer einzelnen Informationseinheit im Fokusfleck auf der gelesenen Informationsebene parallel eine Vielzahl von ungewollt beleuchteten Informationseinheiten gegenüber, die ebenfalls Licht reflektieren, welches dem empfangenen modulierten Lichtstrom in Form eines Mittelwertes überlagert ist.
Auf diese Weise ist zwar ein Erkennen der Information von der nicht ausgewählten Informationsebene ausgeschlossen, jedoch beeinflußt der Mittelwert die Modulationstiefe des empfangenen Laserlichts, da dieser eine von der Information wenig abhängige Grundhelligkeit aufweist.
Es hat sich jedoch gezeigt, daß bei den obengenannten Schichtabständen von einigen zehn Mikrometern diese Grundhelligkeit von der Verteilung der Pits und der Lichtverteilung in der beleuchteten Fläche abhängig ist. Zum Beispiel beeinflußt eine geringe Pithäufigkeit in der Mitte des Strahlenbündels, auf Grund einer dort vorhandenen höheren Lichtintensität, in größerem Umfang den Mittelwert der Grundhelligkeit als am Rand.

Die teildurchlässigen Verspiegelungen reduzieren ebenfalls die Modulationstiefe beim Lesen von mehrschichtigen Aufzeichnungsträgern. Weisen diese zum Beispiel eine Reflexionsfähigkeit von 30% auf, so kehrt beim Lesen der dem Substrat nächsten, ersten Informationsebene im Vergleich zur Audio-CD maximal 30% als auswertbare Lichtmenge zurück. Das heißt, etwa 70% der ausgesandten Lichtmenge durchdringen die erste Informationsebene und kehren entweder, wie oben beschrieben, als diffuse störende Grundhelligkeit zurück oder werden aufgrund ihrer Einfallsrichtung überwiegend von der folgenden Schicht so abgelenkt, daß diese nicht zur Lesevorrichtung zurückkehren.
Beim Lesen einer zum Substrat entfernteren Informationsebene, zum Beispiel der zweiten Schicht, werden bereits auf dem Hinweg etwa 30% der ausgesandten Lichtmenge als Störlicht von der Zwischenschicht der ersten Informationsebene reflektiert. Selbst bei Totalreflexion durch die verspiegelte zweite Schicht kehrt von der auf 70% gedämpften Lichtmenge, die die zweite Informationsebene durchdringt, nur eine geminderte Lichtmenge zurück, da das reflektierte Licht auf dem Rückweg ebenfalls die teildurchlässige Verspiegelung passieren muß und abgelenkt wird. Je nach der momentanen Phasenbeziehung zwischen den Lichtwellen der beiden reflektierten Lichtmengen wird die störende Lichtmenge zur auswertbaren Lichtmenge addiert oder von dieser subtrahiert. Dieses bewirkt eine instabile Störsignalamplitude, die das rückgewandelte Wiedergabesignal beeinflußt.

Aus der Druckschrift US-A-5 373 499 ist ein optischer Mehrebenen-Datenspeicher bekannt, der aus mehreren stapelförmig angeordneten, transparenten Substratscheiben besteht. Die Substratscheiben werden mit Zwischenringen, die auf den inneren und äußeren Scheibenrändern angebracht sind, auf Abstand gehalten. Im Gegensatz zu den bekannten Aufzeichnungsträgern vom Typ der COMPACT disc sind die Informationsebenen ausschließlich auf im Innern des Stapels liegenden Oberflächen von Substratscheiben angeordnet. Um beim Lesen der Ebenen Abbildungsfehler des Laserstrahls infolge des Durchlaufens von unterschiedlichen Weglängen in den Substratscheiben zu vermeiden, tragen jedoch nur jene Oberflächen eine Informationsebene, die beim Abtasten gewährleisten, daß der Laserstrahl zwar auf eine von der Ebene abhängigen Gesamtweglänge eingestellt werden muß, wobei jedoch die Weglängen durch die Substratscheiben konstant bleibt. Das Lesen des Mehrebenen-Datenspeichers erfolgt, indem der Laserstrahl sowohl direkt als auch nach Reflexion an einer gesonderten Reflexionsebene oder einer anderen Informationsebenen auf die zu lesende Ebene fokussiert wird.
Von Nachteil ist, daß dieser Mehrebenen-Datenspeicher in seinem konstruktiven Aufbau keine Übereinstimmung mit der bekannten Audio-CD aufweist. Eine Fertigung unter Nutzung vorhandener, weitestgehend unveränderter Technologie ist infolge der erforderlichen parallelen Bearbeitung der einzelnen Substratscheiben nicht ohne wesentlichen zusätzlichen Fertigungsaufwand möglich. Das Realisieren eines gemeinsamen Abspielgerätes für bisher auf dem Markt befindliche Aufzeichnungsträger und dem stapelförmigen Mehrebenen-Datenspeichers ist ebenfalls sehr aufwendig.

Ein aus der Druckschrift EP-A-0 605 924 bekanntes System zum Speichern von Information benutzt ebenfalls einen optischen Aufzeichnungsträger mit mindestens zwei Informationsebenen.
Damit die Lesevorrichtung die aufgezeichnete Information zuverlässig lesen kann, müssen die Störsignale, die an den nicht gelesenen Informationsebenen entstehen, bestimmten sogenannten Interferenzerfordernissen genügen. Es wird gezeigt, daß Energieverluste beim ausgesandten Laserlicht Streulicht im optischen System und die Rauheit der gelesenen Informationsebene den Anteil der Störungen beeinflussen. Für den Aufbau eines mehrschichtigen Aufzeichnungsträgers werden diverse Kennwerte vorgeschlagen, die sich aus den Interferenzerfordernissen ergeben, wie der Dicke von Zwischenschichten, dem Reflexions- und Durchgangsverhalten der Informationsebenen und dem Ausmaß, in welchem Pits von verschiedenen Informationsebenen den reflektierten Lichtstrom beeinflussen.
Am Beispiel eines Aufzeichnungsträgers mit drei äquidistanten Informationsebenen wird dargestellt, wie das Lesen der von der Vorrichtung entferntesten dritten Informationsebene durch die erste Informationsebene gestört wird. Zum Lesen der dritten Informationsebene durchdringt das Laserlicht zunächst die erste und die zweite informationsebene und bildet auf der dritten Informationsebene einen ersten Fokusfleck. Sowohl die erste als auch die zweite Ebene reflektieren jedoch auch einen Teil des Laserlichts. Der von der zweiten Ebene reflektierte Teil des Laserlichts bildet an der ersten einen zweiten Fokusfleck, da die Informationsebenen äquidistant angeordnet sind. Das Licht des zweiten Fokusflecks wird zunächst an der ersten und dann an der zweiten Ebene reflektiert und gelangt gemeinsam mit dem reflektierten Laserlicht, das von der Information der dritten Informationsebene moduliert ist, als Störung in die Lesevorrichtung. Als Folge dessen wird sowohl die Information von der dritten Ebene als auch die der ersten Ebene parallel gelesen. Dieser Mangel wird gemäß der Druckschrift EP-A-0 605 924 dadurch vermieden, daß zwischen den Informationsebenen transparente Zwischenschichten mit verschiedener Dicke verwendet werden.

Nachteilig ist jedoch, daß mit der Zahl von Zwischenschichten auch die Zahl der Übergänge mit optisch verschiedenem Durchgangsverhalten steigt. Dieses erfordert nicht nur einen zusätzlichen Fertigungsaufwand, sondern bedingt auch zusätzliche Fehlermöglichkeiten beim Fertigen des Aufzeichnungsträgers.

Da der Aufzeichnungsträger beim Lesen Bestandteil des optischen Systems ist, verringert ein Erhöhen der Anzahl und der Vielfalt der erforderlichen Schichten, wie zum Beispiel die oben beschriebenen zusätzlichen transparenten Distanzschichten, den Störabstand bei der Wiedergabe. Die Lesbarkeit wird unter anderem durch optische Homogenität des transparenten Materials in der Nähe der Informationsebenen, der Qualität der Grenzflächen zwischen den Schichten insbesondere deren Rauheit und Toleranzen beim Fertigen beeinflußt. Neben Einschlüssen von Fremdstoffen und Blasen stören insbesondere Schwankungen der Brechungszahl.

An die verschiedenen Materialien des Trägers und ihre Verarbeitung müssen deshalb mit der wachsenen Anzahl der Schichten entsprechend höhere Anforderungen gestellt werden.
Da die Spur- und Fokusnachführung der Lesevorrichtung ebenfalls eine entsprechende Steuergröße aus dem reflektierten Licht generiert, beeinflußt das überlagerte Störsignal auch die Arbeit dieser Einrichtungen negativ.
Daraus folgt ein weiteres Verringern des Nutzsignal-Störsignal-Abstandes.

Damit ist ersichtlich, daß beim Lesen von mehrschichtigen Aufzeichnungsträgern dem empfangenen Lichtsignal, infolge des gegenseitigen Beeinflussens der Informationsebenen, stets eine größere Störwechselgröße überlagert ist als bei der bekannten Audio-CD.

Ausgehend von den dargelegten Problemen ist es Aufgabe der Erfindung, ein Wiedergabesystem mit einem optischen Aufzeichnungsträger mit mehreren Informationsebenen zu schaffen, bei dem mit einfachen Mitteln beim Lesen ein geringeres gegenseitiges Beeinflussen zwischen verschiedenen Informationsebenen erzielt wird und bei dem die Vielfalt und Anzahl von zusätzlich benötigten Schichten gegenüber bekannten Lösungen reduziert ist. Bezüglich des Aufbaus des Aufzeichnungsträgers soll bewußt eine maximale Übereinstimmung mit der bekannten Audio-CD angestrebt werden, um einerseits weitestgehend unverändert mit vorhandener Technologie zu fertigen und andererseits ohne größeren mechanischen Zusatzaufwand, ein Abspielgerät für verschiedene Trägertypen nutzen zu können.

Zum Lösen der Aufgabe geht die Erfindung von einem optischen Aufzeichnungsträger aus, der eine transparente Substratscheibe mit mehreren parallelen Informationsebenen enthält, welche auf zumindest teildurchlässig verspiegelten Oberflächen Information enthalten. Die Information ist vorteilhaft jeweils nach dem gleichen Aufzeichnungsverfahren aufgezeichnet, so daß alle Informationsebenen seriell mit einem einfachen Lichtsensorsystem lesbar sind. Eine optische Lesevorrichtung liest die Information von mindestens zwei Informationsebenen einseitig durch die Substratscheibe hindurch mit einem Laserstrahlenbündel, das alternativ jeweils auf eine Informationsebene fokussierbar ist.

Der erfindungsgemäße Aufzeichnungsträger trägt auf jeder Trägeroberfläche mindestens eine Informationsebene. Die dem optischen System zugewandte Trägeroberfläche trägt mindestens eine teildurchlässig verspiegelte Informationsebene. Die andere Oberfläche trägt, wie bei bekannen Lösungen, entweder nur eine hochgradig verspiegelte Informationsebene oder mindestens eine weitere teildurchlässig verspiegelte Informationsebene und eine hochgradig verspiegelte äußere Informationsebene. Das optische System ist während des Lesens einer Informationsebene, die zwischen dem System und einer entfernteren Informationsebene liegt, nach einer aus der Druckschrift US-A-5,373,499 bekannten Fokussiermethode so eingestellt, daß das Laserlicht nach dem Durchdringen der zu lesenden Ebene und dem Reflektieren an einer entfernteren Ebene auf die zu lesenden teildurchlässig verspiegelte Ebene fokussiert wird. Vorteilhaft wird zum Reflektieren die vom optischen System entfernteste Informationsebene genutzt, die an Stelle der teildurchlässigen Verspiegelung eine hochreflektierende aufweist.

Bei einem doppelschichtigen Aufzeichnungsträger ist es somit möglich, den Abstand der Informationsebenen auf die Dicke der Substratscheibe zu erhöhen und jede Informationsebene vorteilhaft direkt auf eine gesonderte Seite der Substratscheibe, beispielsweise durch Pressen, aufzubringen.
Der Aufzeichnungsträger liegt beim Lesen derart im Abspielgerät, daß das optische System auf die Trägerseite mit der teildurchlässigen Informationsebene strahlt.

Das optische System ist entsprechend der Erfindung während des Lesens der teildurchlässig verspiegelten ersten Informationsebene so eingestellt, daß das Laserlicht nach einem großflächigen Eintreten in die Trägeroberfläche und dem Durchdringen der unter der Eintrittsfläche liegenden ersten Informationsebene und der Substratscheibe auf der hochgradig verspiegelten zweiten Informationsebene, die auf der anderen Substratseite liegt, so großflächig einen Reflexionsfleck projiziert, daß die Rückseite der ersten Informationsebene im Fokuspunkt des gespiegelten Lichts liegt.

Die Erfindung und ihre vorteilhafte Wirkungsweise soll nachstehend an Hand von Ausführungsbeispielen und Figuren näher erläutert werden. Die Figuren zeigen im Einzelnen:
- Fig. 1:: eine schematische Darstellung des Lesens eines bekannten Aufzeichnungsträgers mit einer Informationsebene,
- Fig. 2:: eine schematische Darstellung des Lesens eines bekannten doppelschichtigen Aufzeichnungsträgers
- Fig. 3: eine schematische Darstellung der erfindungsgemäßen Lösung am Beispiel eines doppelschichtigen Aufzeichnungsträgers gemäß der Erfindung
- Fig. 4: eine schematische Darstellung der erfindungsgemäßen Lösung am Beispiel eines mehrchichtigen Aufzeichnungsträgers gemäß der Erfindung
- Fig. 5: eine schematische Darstellung einer weiteren Ausführungsform der Erfindung

Zur besseren Anschaulichkeit werden bei den nachstehenden Betrachtungen die Parameter der Audio-CD benutzt, obwohl die vorliegende Erfindung insbesondere für die Aufzeichnung von Videosignalen vorgesehen ist. Diese Aufzeichnungsträger weisen gegenüber der Audio-CD eine dichtere Pitstruktur auf und werden mit Laserlicht von kürzerer Wellenlänge gelesen.
Alle nachfolgend genannten Maße spiegeln nicht unbedingt die praktisch realisierten Parameter wieder, sondern dienen dem Vergleich mit dem Stand der Technik.

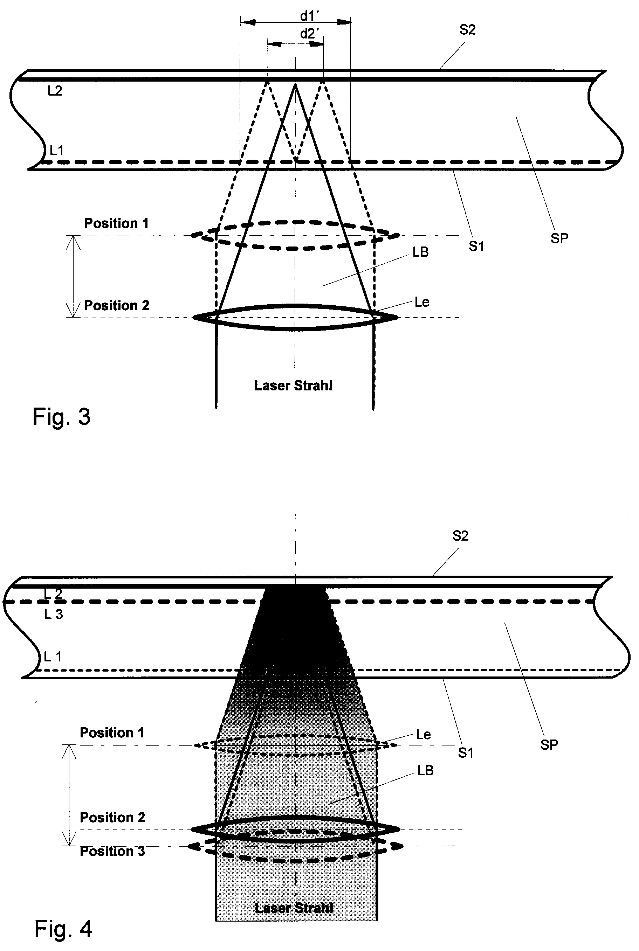

Fig. 3 zeigt eine Lösung gemäß der Erfindung für einen doppelschichtigen Aufzeichnungsträger. Im Gegensatz zu den bekannten optischen Aufzeichnungsträgern entsprechend den schematisch Darstellungen in Fig. 1 und Fig. 2, ist eine erste teildurchlässig verspiegelte Informationsebene L1 direkt unter der dem optischen System zugewandten Trägeroberfläche S1 angeordnet. Eine zweite hochgradig verspiegelte Informationsebene L2 ist, wie bekannt, unter der dem optischen System abgewandten Trägeroberfläche S2 angeordnet.
Die Informationsebenen L1, L2 können vorteilhaft direkt in die Oberflächen der Substratscheibe gepreßt und jeweils in bekannter Weise mit einer zumindest an der Trägeroberfläche S1 transparenten Schutzschicht vor mechanischer Beschädigung geschützt werden.

Ein optisches System Le einer nichtabgebildeten Lesevorrichtung befindet sich entsprechend der Erfindung während des Lesens der ersten Informationsebene L1 in einer Position 1 und richtet kontinuierlich ein Laserstrahlenbündel LB senkrecht auf den Aufzeichnungsträger. Das in die Trägeroberfläche S1 eintretende Laserstrahlenbündel LB beleuchtet eine annähernd kreisrunde Eintrittsfläche mit einem Durchmesser d1', der mehr als doppelt so groß ist wie der entsprechenden Durchmesser d1 bei der bekannten Lösung gemäß Fig. 2. Bezogen auf die Kennwerte einer Audio-CD ist damit die Energiemenge beim Eintritt des Laserlichts in die Trägeroberfläche S1 auf eine Eintrittsfläche mit etwa einem Durchmesser d1'= 1,6 mm verteilt. Da die Informationsebene 1 nur einen geringen Reflexionsgrad aufweist, zum Beispiel von 30%, tritt etwa 70% der Lichtmenge des Laserstrahlenbündels LB durch die Informationsebene 1 hindurch in die transparente Substratscheibe SP ein und wird an der hochreflektierenden zweiten Informationsebene L2 auf der anderen Seite der Substratscheibe Sp reflektiert.

Erfindungsgemäß ist die Position 1 vom Aufzeichnungsträger so weit entfernt, daß der Fokuspunkt des reflektierten Laserstrahlenbündels LB auf der Rückseite der Informationsebene 1 liegt. Das optische System Le ist in bekannter Weise so dimensioniert, daß im Fokuspunkt das Licht auf einen annähernd kreisförmigen Fokusfleck konzentriert ist, dessen Durchmesser nur wenig größer als eine Pitbreite ist. Das Laserstrahlenbündel LB wird sowohl auf seinem Hinweg vom optischen System Le über die Informationsebene L2 zur Rückseite der Informationsebene L1 als auch auf seinem Rückweg in umgekehrter Richtung an einer kreisförmigen Reflexionsfläche der Informationsebene 2 reflektiert, die einen Durchmesser d2 aufweist.

Der Durchmesser d2 ist etwa halb so groß wie der Durchmesser d1 und beträgt etwa d2 = 0,8 mm. Eine systembedingte Spursteigung von 1,6 µm pro Umdrehung in Verbindung mit den genannten Durchmessern für Eintrittsfläche und Relexionsfläche bewirken, daß das Laserstrahlenbündel LB zunächst eine Kreisfläche von Informationsebene 1 passiert, in der gleichzeitig etwa 1000 verschiedene parallele Spurteile liegen, und dann an einer Kreisfläche von Informationsebene 2 gespiegelt wird, auf der etwa 500 Spurteile nebeneinander liegen, bevor seine Lichtenergie auf einen Teil einer einzelnen Informationseinheit in der zu lesenden Spur konzentriert wird.

Bei einer systembedingten maximalen Pitlänge von 3,6 µm und gleichem maximalem Pitabstand enthalten die Spurteile, die in der Mitte der Eintrittsfläche auf Informationsebene 1 liegen, theoretisch mindestens 222 Pits und die in der Mitte der Relexionsfläche auf Informationsebene 2 liegen, mindestens 111 Pits. Da jedes Pit durch die Lage von Anfang und Ende gleichzeitig zwei Informationseinheiten markiert und sytembedingt niemals eine solche große Anzahl von Pits mit maximaler Länge und gleichem maximalen Abstand auftreten können, ist abzuschätzen, daß die im Strahlengang liegenden Spurteile ein Vielfaches der genannten Zahl von einzelnen Informationseinheiten enthalten.

Bei derart vielen Informationseinheiten ist eine ausgewogene Verteilung in der Pitstruktur zu erwarten. Dieses hat den Vorteil, daß der Strahlengang des Laserlichts sowohl von der Oberflächenstruktur der Informationsebenen 1 im Bereich der Eintrittsfläche als auch von der Oberflächenstruktur der Informationsebenen 2 im Bereich der Reflexionsfläche nur unwesentlich beeinflußt wird, da die vielen im Strahlengang liegenden Informationseinheiten einen ausreichend stabilen Mittelwert der reflektierten Störlichtmenge bilden. Obwohl Informationsebene 1 direkt unter der Trägeroberfläche S1 liegt, kann die Information wie bei herkömmlichen Aufzeichnungsträgern ohne Beeinträchtigung durch Ablagerungen und Kratzer auf der Trägeroberfläche S1 gelesen werden.
Das heißt, das dem modulierten Nutzlicht überlagerte Störlicht weist zwar einem relativ großen Gleichwert, aber nur eine geringe Störmodulation auf, die wegen der Vielzahl der gemittelten Einzelereignisse im Mittelwert egalisiert wird und vom Nutzlicht mit einfachen Filtermitteln abgetrennt werden kann, so daß eine gegenüber den bekannten Lösungen kleinere Wechselkomponente als Störsignal bleibt.

Während des Lesens der Informationsebene L2 befindet sich das optische System Le in einer Position 2. Das Laserlicht dringt wie bei der aus Fig. 2 bekannten Lösungen in den Aufzeichnungsträger ein, passiert die Informationsebene 1 mit einem Durchmesser d1 und wird auf die Oberfläche von Informationsebene 2 fokussiert. Im Gegensatz zur bekannten Lösung, bei der die Informationsebene 1 und 2 einen Abstand von 40 µm aufweisen, sind bei der vorliegenden Erfindung die Ebenen 1,2 mm von einander entfernt. Dieses hat den Vorteil, daß das in die Trägeroberfläche S1 eintretende Laserstrahlenbündel LB zunächst die Informationsebene 1 mit einem Querschnittsdurchmesser etwa von 800 µm passiert. Beim bekannten Aufzeichnungsträger gemäß Fig. 2 beträgt der Querschnittsdurchmesser auf der Informationsebene 1 rund 27 µm. Damit wird die im Strahlengang liegende Kreisfläche von Informationsebene 1, gegenüber der bekannten Lösung gemäß Fig. 2, nahezu um Faktor 880 vergrößert. Gleichzeitig dient als Abstandshalter zwischen den Informationsebenen L1 und L2 die bei allen Aufzeichnungsträgern vorhandene Substratscheibe SP. Diese kann mit bekannten und verbreitenen Herstellungsanlagen in hinreichender Qualität insbesondere bezüglich der Rauheit, Planheit sowie optischer und mechanischer Homogenität gefertigt werden.

Die Ausführungen zeigen, daß die erfindungsgemäße Lösung auch beim Lesen der Informationsebene 2 gegenüber den bekannten Lösungen einen besseren Stör-Nutzsignal-Abstand realisiert.

Fig. 4 stellt eine vorteilhafte Weiterbildung der Erfindung dar. Dabei wird der in Fig. 3 gezeigte und oben beschriebene Aufzeichnungsträger in der aus Fig. 2 bekannten Weise um eine zusätzliche Informationsebene L3 erweitert. Diese kann, wie vom Beispiel gemäß Fig. 2 bekannt, unter der vom optischen System abgewandten Trägeroberfläche S2 angeordnet und direkt, wie die Informationsebene L2, gelesen werden. In Fig. 4 ist die Position 3 dargestellt, die das optische System zum Lesen der Informationsebene 3 einnimmt.
Erfindungsgemäß kann dieser Aufzeichnungsträger jedoch auch unter der dem optischen System zugewandten Trägeroberfläche S2 mindestens um eine in Fig. 4 nicht gezeigte, zusätzliche Informationsebene erweitert werden, wobei diese Ebene wie die Informationsebene 1 erfindungsgemäß über eine Reflexion an der Informationsebene 2 gelesen wird.

Eine Lösung gemäß dieser Ausführungsform bietet den Vorteil, daß der bekannte doppelschichtige Aufzeichnungsträger relativ einfach ohne vielfältige Zwischenschichten im wesentlichen durch die zweifache Anwendung der bekannten Herstellungsverfahren mit mindestens einer zusätzlichen Informationsebene ausgestattet werden kann, ohne daß die eingangsbeschriebene gegenseitige Beeinflussung zwischen erster und dritter Ebene stattfindet.

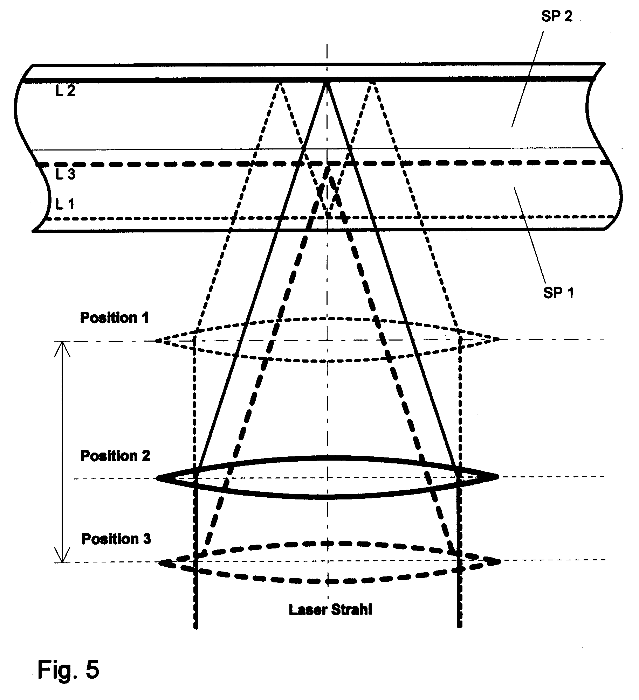

Fig. 5 zeigt eine weitere Ausführungsform der Erfindung. In diesem Fall geht die Erfindung von einem Aufzeichnungsträger aus, der aus zwei verschiedenen Substratplatten SP 1 und SP 2 zusammengesetzt wird. Dabei sind im dargestellten Beispiel auf der Substratplatte 1 beidseitig je eine Informationsebene L1 und L3 angeordnet, die beide teildurchlässig verspiegelt sind. Die Substratplatte SP 2 trägt auf der Außenseite die hochgradig verspiegelte Informationsebene L2.

Die Informationsebenen L1 und L2 werden entsprechend der zu Fig. 3 beschriebenen Ausführungsform der Erfindung gelesen.
Die Informationsebene L3 wird, wie in Fig 5 dargestellt, oder erfindungsgemäß unter Nutzung der Informationsebene als Reflektor gelesen. Mit dieser Ausführungsform der Erfindung kann relativ einfach ein dreischichtiger Aufzeichnungsträger realisiert werden, bei dem die gegenseitige Beeinflußung der Informationsebenen reduziert ist.

Die bekannten Aufzeichnungsträger ermöglichen im Zusammenhang mit der Erfindung noch weitere vorteilhafte Anordungen von drei und mehr Informationsschichten, die im Einzelnen nicht weiter dargestellt werden sollen. Bei diesen mehrschichtigen Ausführungen kann es wegen der mehrfachen Lichtdämpfung an den Ebenen vorteilhaft sein, eine andere als die im Strahlengang letzte Informationsebene 2 zur Reflexion zu benutzen.

## Patentansprüche

1. Wiedergabesystem für einen optischen Aufzeichnungsträger mit mehreren Informationsebenen (L1, L2), die auf einer transparenten Substratscheibe (SP) in Form von zumindest teildurchlässig verspiegelten Flächen enthalten sind, wobei eine erste von den zwei Trägeroberflächen (S1, S2) des Aufzeichnungsträgers eine hochgradig verspiegelte Informationsebene (L2) ist und ein an der zweiten Trägeroberfläche (S1) befindliches optisches System (Le) mit einem Laserstrahlenbündel (LB) durch die Substratscheibe (SP) hindurch jeweils eine Informationsebene (L1, L2) liest, **dadurch gekennzeichnet,** daß die zweite Trägeroberfläche (S1) teildurchlässig verspiegelt und ebenfalls als Informationsebene (L1) ausgebildet ist und daß das optische System (Le) während des Lesens dieser Informationsebene (L1) so eingestellt ist, daß das Laserstrahlenbündel (LB) nach dem Durchdringen der teildurchlässig verspiegelten Trägeroberfläche (S1) und dem Reflektieren an der hochgradig verspiegelten Informationsebene (L2) auf der Rückseite der teildurchlässig verspiegelten Informationsebene (L1) einen Fokuspunkt bildet.

2. Wiedergabesystem nach Anspruch 1, dadurch gekennzeichnet, daß die Substratscheibe (SP) weitere teildurchlässig verspiegelte Informationsebenen (L3) aufweist.

3. Wiedergabesystem nach Anspruch 1, dadurch gekennzeichnet, daß zwei abstands los verbundene, transparente Substratscheiben (SP1, SP2) den optischen Aufzeichnungsträger bilden, zwischen denen mindestens eine weitere teildurchlässig verspiegelte Informationsebene (L3) liegt.

4. Wiedergabesystem nach Anspruch 1 und 2, dadurch gekennzeichnet, daß die Informationsebenen (L1, L2) direkt in die Oberflächen der Substratscheibe gepreßt und jeweils in bekannter Weise mit einer zumindest an der Trägeroberfläche (S1) transparenten Schutzschicht vor mechanischer Beschädigung geschützt sind.
